# EUROPEAN PATENT APPLICATION

(11) **EP 1 605 616 A2**
(43) Date of publication of application: **14.12.2005**
(21) Application number: 05253545.7
(22) Date of filing: 09.06.2005
(51) Int. Cl.: H04H 1/00

(54) **Method, medium and apparatus for processing slide show data**

(30) Priority: 11.06.2004 KR 2004043072
(71) Applicant: SAMSUNG ELECTRONICS CO., LTD., Suwon-si, Gyeonggi-do (KR)
(72) Inventor: Youm, Sun-hee, Suwon-si Gyeonggi-do (KR); Park, Jeong-hoon, Gwanak-gu Seol (KR); Park, Sung-il, Suwon-si Gyeonggi-do (KR); Park, Ju-hee, Yeongtong-gu Suwon-si Gyeonggi-do (KR); Seo, Ju-hee, Yeongtong-gu Suwon-si Gyeonggi-do (KR)
(74) Representative: Robinson, Ian Michael

(57) **Abstract**

A method, medium, and apparatus for storing and displaying slide show data in response to a user command input via user interface. The method includes receiving the slide show data according to a predetermined protocol, parsing display screen construction information contained in the received slide show data and storing the slide show data according to the display screen construction information, and when a user command is given, searching for the stored slide show data and executing the user command. Accordingly, it is possible to review or store slide show data that was displayed via user interface, thereby enabling an interaction with a user.

## Description

Embodiments of the present invention relate to Digital Audio Broadcasting (DAB), and more particularly, to a method and medium for storing slide show data and displaying it on a DAB receiver in response to user input received via a user interface, and an apparatus for receiving and storing the slide show data.

Digital Audio Broadcasting (DAB) is multimedia broadcasting that allows transmission of multi-channel audio made of high-quality digital data, various additional data, still images, video images, and graphics data. Through DAB, it is possible to provide multimedia services, such as travel and traffic information service, a program linkage information service that provides a news image combined with headline characters or weather forecast and traffic information combined with electronic maps, for example, enhanced services such as web site broadcasting or Global Positioning System (GPS) service for DAB, and moving image service.

A slide show is a type of various multimedia services. In the slide show, images are transmitted to and sequentially displayed on a DAB receiver according to a Multimedia Object Transmission (MOT) protocol. The slide show provides information regarding character(s) or image(s) related to received audio. However, a conventional slide show simply displays contents provided by a service provider but does not allow a user to review already displayed slide show contents or individually store desired slide show contents.

According to the present invention there is provided an apparatus and method as set forth in the appended claims. Preferred features of the invention will be apparent from the dependent claims, and the description which follows.

Embodiments of the present invention provide methods media, and apparatuses for providing a slide show, in which received slide show data is stored and displayed in response to a user command.

To achieve the above and/or other aspects and advantages, embodiments of the present invention set forth a method of processing slide show data, including receiving the slide show data according to a predetermined protocol, parsing display information contained in the received slide show data and storing the received slide show data according to the display information, and upon receipt of a user command, searching for the stored slide show data and executing the user command.

The slide show data can be searched for and displayed when the user command is a track command. In addition, slide show data that is being currently displayed can be stored when the user command is a store command.

The display information may include a field presenting a name of an image file of the slide show data, and a time field storing information regarding a point of time when the slide show data is output.

To achieve the above and/or other aspects and advantages, embodiments of the present invention set forth an apparatus for processing slide show data, including a data receiving unit receiving the slide show data, a parser parsing a header core and a header extension field contained in the received slide show data, a slide show data storage unit (660) storing display information contained in the parsed header extension field, a controller controlling an image processing unit according to the display information, a user interface unit for receiving a command, and the image processing unit processing a screen for the slide show data according to the display information.

The slide show data storage unit (660) may store ContentsName information, TriggerTime information, and display data that includes image data corresponding to the slide show data.

The image processing unit may display the image data according to the TriggerTime information when no command is input to the user interface, and detect and displays the display data from the slide show data storage unit (660) when a track command is input to the user interface.

Further, the image processing unit may store currently displayed slide show data as a ContentsName file in a storage unit when a store command is input to the use interface.

To achieve the above and/or other aspects and advantages, embodiments of the present invention set forth a medium comprising computer readable code implementing embodiments of the present invention.

To achieve the above and/or other aspects and advantages, embodiments of the present invention set forth a method of operating in a Digital Audio Broadcasting (DAB) system, including receiving a header core field having information of a length of the header core and an information type of multimedia data included in a body associated with the header core, receiving a header extension field associated with the header core including information regarding the multimedia data in the body, and displaying the multimedia data if an input user command is a track command and storing the multimedia data if the input user command is a store command.

The header core may be 7 bytes long, the information type of the multimedia data may be any of JPEG or GIF, the header extension field may have a variable length, and the header extension field may include content name information of the multimedia data. The content name information may include a character set indicator, a reserved area, and a character field. The character set indicator may indicate a language of a character in the character field.

The head extension field may include trigger time information having a point of time when the multimedia data is output. The trigger time information may further include a validity flag field, a Modified Julian Date data field, a reserved bit field, a Universal Time Coordinated (UTC) flag bit field, and a UTC time bit field. In addition, the UTC time field length may be 27 bits long if the UTC flag bit is set to"1".

To achieve the above and/or other aspects and advantages, embodiments of the present invention set forth a method of transmitting slide show data for a displaying apparatus, the method including segmenting a Multimedia Object Transfer (MOT) packet, packetizing the segmented MOT packet to a Main Service Channel (MSC), classifying corresponding MSC data into a packet data and sub field data in Program Associated Data (PAD), and transmitting the packet data and sub field data in a channel as of an ensemble.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings_of which:
Figure 1 illustrates a Multimedia Object Transfer (MOT) protocol;
Figure 2 illustrates a data structure of a MOT packet, according to an embodiment of the present invention;
Figure 3 illustrates a data structure of ContentsName information;
Figure 4 illustrates a data structure of TriggerTime information;
Figure 5 is a flowchart of a method for receiving interactive data and processing slide show data as instructed in the interactive data, according to an embodiment of the present invention; and
Figure 6 is a block diagram of an apparatus for processing a slide show, according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

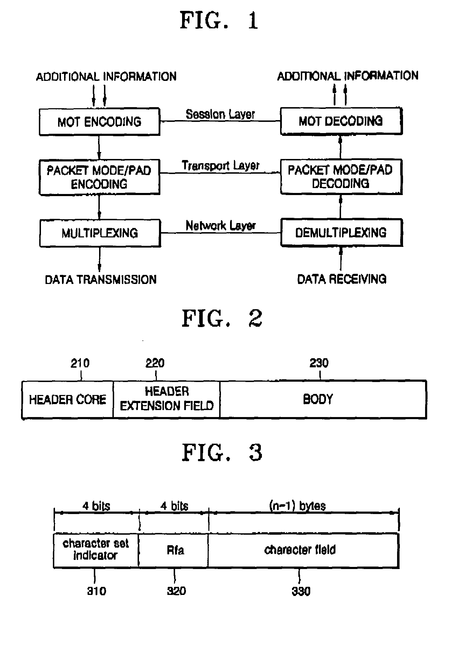

Figure 1 shows a Multimedia Object Transfer (MOT) protocol.

Using the illustrated MOT protocol, Digital Audio Broadcasting (DAB) provides various multimedia services, including audio services. The multimedia service data is transmitted according to the MOT protocol. An object of the multimedia service data is divided into several MOT packets. Each of the MOT packets is segmented into predetermined pieces, included in a Main Service Channel (MSC), and transmitted to a transport layer. In the transport layer, MSC data is classified into two groups: one group that will be transmitted as packet data and the other group that will be included into a sub field in Program Associated Data (PAD). The classified two groups are stored in a channel of an ensemble. In a network layer, such respective channels are constructed and transmitted as ensembles.

Figure 2 illustrates a data structure of a MOT packet, according to an embodiment of the present invention. The MOT packet of Figure 2 includes a header core 210, a header extension field 220, and a body 230.

The header core 210 is 7 bytes long, and stores information regarding the lengths of the header core 210 and the header extension field 220 and information regarding the type of a multimedia object included in the body 230, for example. For instance, the type information of the multimedia object indicates whether an image type of the multimedia object is JPEG or GIF. The header extension field 220 has a variable length and provides information regarding the multimedia object included in the body 230, such as ContentsName information that specifies a content name of the multimedia object, TriggerTime information regarding a point of time when the multimedia object is output, and interactive data that can be changed interactively. Binary Format for Scene (BIFS) data is a type of the interactive data. The BIFS data will be described below in greater detail.

Figure 3 illustrates an example data structure of the ContentsName information. Referring to Figure 3, the ContentsName information includes a 4-bit character set indicator 310 indicating whether a character included in a character field 330 is Korean, English, or any other language, a Reserved for additional (Rfa) 320 that is reserved for future use, and the character field 330 of (n-1) bytes. If the name of an image file containing images is aaa.jpg, "aaa" is stored in the character field 330, for example.

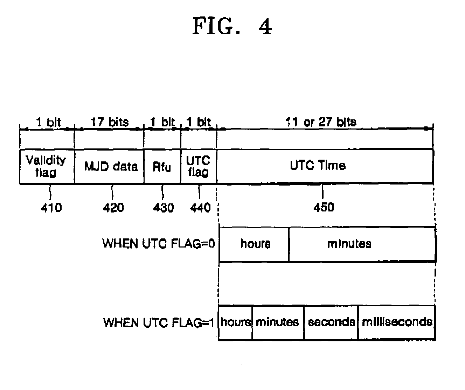

Figure 4 illustrates an example data structure of TriggerTime information. Referring to Figure 4, in a validity flag field 410, whether time information included in the TriggerTime information is valid is signified with lbit. In a Modified Julian Date (MJD) data field 420, a date when a multimedia object is displayed is represented with 17 bits using MJD. A 1-bit Rfu field 430 remains reserved for future use. A 1-bit UTC flag field 440 specifies the type of UTC time field 450. The length and contents of the UTC time field 450 vary depending on the value of the UTC flag field 440. When the UTC flag field 440 has a value of 0, the UTC time field 450 is 11 bits long, that is, it consists of 5 bits and 6 bits specifying the hour and minute when the multimedia object is output, respectively. When the UTC flag field 440 has a value of 1, the UTC time field 450 is 27 bits long, e.g., it includes of 5 bits, 6 bits, 6 bits, and 10 bits that specify the hour, minute, second, and millisecond when the multimedia object is output, respectively. Accordingly, an analysis of the TriggerTime information indicates when an object included in the body 230 must be displayed.

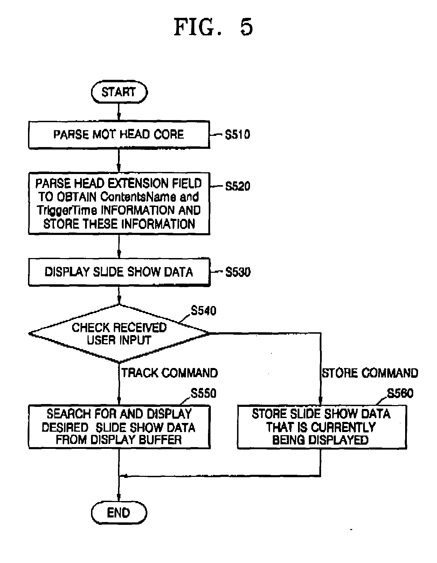

Figure 5 is a flowchart of a method of receiving interactive data and processing slide show data in accordance with the interactive data, according to an embodiment of the present invention. In this method, when a MOT packet containing slide show data, transmitted according to a MOT protocol, is received, a MOT header core of the MOT packet is parsed (S510). Next, a header extension field is parsed to obtain ContentsName and TriggerTime information regarding the slide show data and these information are stored in a display buffer (S520). Next, the stored slide show data is displayed on a screen (S530). Next, received user input is checked (S540). If the received user input is a track command that instructs the stored slide show data to be displayed while moving to an address of the display buffer, an address of the display buffer where the slide show data is stored is searched, and the slide show data at the address is output (S550). When the user input is a store command, to store the stored slide show data, , the slide show data is stored as a file named ContentsName of the multimedia object thereof (S560). The user input may be provided via a mouse, a keyboard, user voice, or a touch screen.

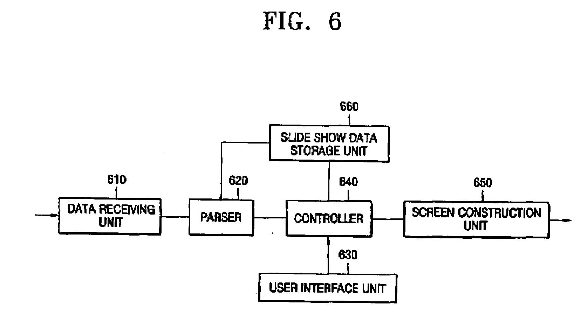

Figure 6 is a block diagram of an apparatus for processing a slide show, according to an embodiment of the present invention. The apparatus of Figure 6 includes a data receiving unit 610, a parser 620, a user interface unit 630, a controller 640, an image processing unit 650, and a slide show data storage unit 660.

The data receiving unit 610 receives a MOT packet containing slide show data according to a MOT protocol. A header core and header extension field of the MOT packet are parsed by the parser 620 to obtain ContentsName and TriggerTime information of the slide show data, and the slide show data is displayed at a time specified in the TriggerTime information contained in the header extension field. The obtained ContentsName and TriggerTime information of the slide show data are stored in the slide show data storage unit 660. When the user interface unit 630 inputs a user command to the controller 640 via a keyboard, a mouse, or a touch screen, slide show data to be displayed is accessed from the slide show data storage unit 660, as instructed by the user command. Next, the image procession unit 650 processes and displays a screen according to the TriggerTime information or user input.

More specifically, the slide show data received by the data receiving unit 610 is decoded to obtain the ContentsName information, and the TriggerTime information, and display data having image data, and these information are stored in the slide show data storage unit 660. If a user command is not input, the image data is displayed as specified in the TriggerTime information. The user interface unit 630 may receive a track command that instructs images to be sequentially detected and displayed, and a store command instructing a currently displayed image to be stored. When the track command is input to the user interface unit 630, the display data stored in the slide show data storage unit 660 is detected and displayed. Alternatively, all display data stored may be sequentially displayed in response to a user command. When the store command is input, slide show data that is currently displayed on a screen is stored as a ContentsName file in a storage device of a receiver.

Embodiments of the present invention can be implemented through computer readable code/instructions (including code segments) in a medium, e.g., a computer readable medium. Based on the discussed embodiments of the present invention, corresponding computer readable code can be easily derived by computer programmers in this art. The medium may be any medium which can store/transmit the computer readable code, such as a magnetic recording medium, an optical recording medium, and a carrier wave, for example.

As described above, compared to a conventional, passive, and static slide show service, a slide show service according to embodiments of the present invention is advantageous in that it is possible to review or store slide show data that was displayed via user interface, thereby enabling an interaction with a user.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing slide show data (210, 220, 230), comprising:
receiving the slide show data (210, 220, 230) according to a predetermined protocol;
parsing display information (210, 220) contained in the received slide show data (210, 220, 230) and storing the received slide show data (210, 220, 230) according to the display information; and
upon receipt of a user command, searching for the stored slide show data (210, 220, 230) and executing the user command.

2. The method of claim 1, wherein the slide show data is searched for and displayed when the user command is a track command.

3. The method of claim 1, wherein slide show data (210, 220, 230) that is being currently displayed is stored when the user command is a store command.

4. The method of claim 1, 2 or 3 wherein the display information comprises:
a field (330) presenting a name of an image file of the slide show data (210, 220, 230); and
a time field (450) storing information regarding a point of time when the slide show data (210, 220, 230) is output.

5. An apparatus for processing slide show data (210, 220, 230), comprising:
a data receiving unit (610) receiving the slide show data (210, 220, 230);
a parser (620) parsing a header core (210) and a header extension field (220) contained in the received slide show data (210, 220, 230);
a slide show data (210, 220, 230) storage unit (660) storing display information contained in the parsed header extension field (220);
a controller (640) controlling an image processing unit (650) according to the display information;
a user interface unit (630) for receiving a command; and
an image processing unit (650) processing a screen for the slide show data (210, 220, 230) according to the display information.

6. The apparatus of claim 5, wherein the slide show data (210, 220, 230) storage unit (660) stores ContentsName information (310, 320, 330), TriggerTime information (410-450), and display data (230) that includes image data corresponding to the slide show data (210, 220, 230).

7. The apparatus of claim 5 or 6, wherein the image processing unit (650) displays the image data according to the TriggerTime information (410-450) when no command is input to the user interface, and detects and displays the display data (230) from the slide show data (210, 220, 230) storage unit (660) when a track command is input to the user interface.

8. The apparatus of claim 5, 6 or 7 wherein the image processing unit stores currently displayed slide show data (210, 220, 230) as a ContentsName file in a storage unit when a store command is input to the user interface.

9. A medium comprising computer readable code implementing the method of any of claims 1 to 4.

10. A method of operating in a Digital Audio Broadcasting (DAB) system, comprising;
receiving a header core field (210) having information of a length of the header core (210) and an information type of multimedia data included in a body (230) associated with the header core (210);
receiving a header extension field (220) associated with the header core (210) including information regarding the multimedia data in the body; and
displaying the multimedia data if an input user command is a track command and storing the multimedia data if the input user command is a store command.

11. The method of claim 10, wherein the header core (210) is 7 bytes long.

12. The method of claim 10 or 11, wherein the information type of the multimedia data is any of JPEG or GIF.

13. The method of claim 10, 11 or 12, wherein the header extension field (220) has a variable length.

14. The method of claim 10, 11, 12 or 13, wherein the header extension field (220) comprises content name information (310-330) of the multimedia data.

15. The method of claim 14, wherein the content name information comprises:
a character set indicator (310);
a reserved area (320); and
a character field (330).

16. The method of claim 15, wherein the character set indicator (310) indicates a language of a character in the character field (330).

17. The method of any of claims 10 to 16, wherein the head extension field (220) comprises trigger time information (410-450) comprising a point of time when the multimedia data is output.

18. The method of claim 17, wherein the trigger time information (410-450) comprises:
a validity flag field (410);
a Modified Julian Date data field (420);
a reserved bit field (430);
a Universal Time Coordinated (UTC) flag bit field (440); and
a UTC time bit field (450).

19. The method of claim 18, wherein the UTC time field length is 27 bits long if the UTC flag bit is set to"1".

20. A method of transmitting slide show data (210, 220, 230) for a displaying apparatus, the method comprising:
segmenting a Multimedia Object Transfer (MOT) packet;
packetizing the segmented MOT packet to a Main Service Channel (MSC);
classifying corresponding MSC data into a packet data and sub field data in Program Associated Data (PAD); and
transmitting the packet data and sub field data in a channel as of an ensemble.
